# FASCICULE DE BREVET EUROPEEN

(11) **EP 2 891 846 B1**
(45) Date de publication et mention de la délivrance du brevet: **01.01.2020**
(21) Numéro de dépôt: 14193785.4
(22) Date de dépôt: 19.11.2014
(51) Int. Cl.: F24F 11/00, F24F 7/00, F24F 11/74

(54) **Procédé de pilotage d un système de ventilation simple flux**
Steuerungsverfahren eines Belüftungssystems mit einfachem Luftfluss
Method for controlling a single-flow ventilation system

(30) Priorité: 19.11.2013 FR 1361346
(43) Date de publication de la demande: 08.07.2015
(73) Titulaire: ALDES AERAULIQUE, 69200 Venissieux Cedex (FR)
(72) Inventeur: Buseyne, Serge, 31200 TOULOUSE (FR); Labaume, Damien, 31570 PRESERVILLE (FR)
(74) Mandataire: Chevalier, Renaud Philippe

(56) Documents cités:
- EP-A1- 1 553 357
- WO-A1-2013/107461
- DE-A1-102010 006 455
- US-A1- 2007 261 558
- US-A1- 2011 253 359

## Description

L'invention concerne le domaine des systèmes de ventilation pour bâtiment d'habitation et plus particulièrement les systèmes de ventilation mécanique à simple flux modulable.

On entendra par bâtiment d'habitation, tout bâtiment de logements individuels et collectifs neufs ou en rénovation.

La ventilation des logements est de plus en plus souvent asservie aux besoins des occupants au moyen de systèmes de ventilation comprenant des capteurs transmettant une mesure à des moyens de régulation qui agissent directement conséquemment sur l'ouverture ou la fermeture des bouches d'extraction d'air ou sur la vitesse d'un moto-ventilateur dédié à la circulation de l'air.

Classiquement, il est connu d'utiliser des bouches d'extraction proportionnelles et/ou des bouches d'extraction d'air à deux débits prédéterminés positionnées dans une pièce technique telle qu'une salle de bain, une cuisine ou des toilettes. Ces bouches d'extraction à deux débits sont couplées avec des capteurs, comme par exemple des cellules photoélectriques, fonctionnant de manière automatique et permettant l'activation ou l'arrêt du débit d'air de ventilation par rapport aux allées et venues dans la pièce des occupants.

Les systèmes de ventilation connus évoqués ci-dessus disposent d'un ou plusieurs capteurs de pollution, mesurant le taux de dioxyde de carbone ou l'hygrométrie ou encore la température, positionnés uniquement dans une ou plusieurs pièces techniques. Le ou les capteurs de pollution peuvent être également disposés sur la bouche d'extraction d'air correspondant à une pièce technique. La pollution mesurée est issue des différentes pièces techniques du logement, et les mesures effectuées dans ces pièces techniques sont considérées comme reflétant la pollution globale du logement incluant également les pièces principales.

En outre, on connait du document DE102010006455, un procédé d'extraction d'air pour un espace global comprenant plusieurs pièces dans lequel des capteurs positionnés dans les pièces sont reliés à une unité de commande et signale à ladite unité de commande les besoins de renouvellement d'air de la pièce à partir de leurs mesures respectives. L'unité de commande peut fonctionner soit à partir de données mesurées en continu soit par un ou plusieurs modes de ventilation prédéterminés.

Avec une telle configuration et un tel fonctionnement, les systèmes de ventilation décrits ci-avant ne permettent pas d'identifier d'où vient la pollution, ce qui engendre une surconsommation et une sur-extraction d'air dans les pièces qui n'ont pas besoin de ventilation.

En outre, pour améliorer la qualité de l'air intérieur dans les pièces principales, certains fabricants rajoutent aux systèmes de ventilation décrits ci-dessus, des bouches d'extraction dans lesdites pièces principales de sorte qu'un capteur positionné dans une pièce principale puisse agir uniquement sur la bouche d'extraction correspondante. Cette pratique a pour inconvénient une multiplication des commandes et des bouches d'extraction ainsi qu'une complexification du système de ventilation.

L'invention a pour but de remédier à tout ou partie des inconvénients précités.

L'invention a pour objet un procédé de pilotage d'un système de ventilation simple flux selon l'invention comprenant les étapes suivantes :
- Etape A : Mesure de pollution dans au moins une pièce principale du bâtiment au moyen d'au moins un capteur de pollution de pièce principale,
- Etape B : Mesure de pollution dans au moins une pièce technique du bâtiment au moyen d'au moins un capteur de pollution de pièce technique,
- Etape C : Comparaison des mesures effectuées en étape A et en étape B au moyen d'un calculateur d'une unité de commande centrale,
- Etape D : Identification des besoins en extraction d'air pour chaque pièce technique et/ou chaque pièce principale au moyen du calculateur de l'unité de commande centrale,
- Etape E : Commande de la répartition d'air en fonction des besoins identifiés en étape D de l'unité de commande centrale vers au moins un régulateur,
- Etape F : Actionnement d'au moins un régulateur associé à une branche d'extraction en fonction de la commande de répartition de l'étape E.
- Etape G : Pilotage de la vitesse du moto-ventilateur.

L'étape G permet d'obtenir une dépression suffisante au bon fonctionnement de l'installation et d'optimiser la pression de fonctionnement du ou des régulateurs.

Avantageusement, lors de l'étape G, si les régulateurs se ferment, la dépression dans les branches d'extraction aura tendance à augmenter, il faudra ralentir la vitesse du moto-ventilateur et inversement si les régulateurs s'ouvrent. En outre, si certains régulateurs s'ouvrent et d'autres se ferment, on pilotera la vitesse du moto-ventilateur de manière à ce que chaque régulateur dispose de la dépression suffisante pour fonctionner, assurant ainsi le débit correct aux bouches quelque soit l'état de fonctionnement. La variation de la pression du ventilateur permet d'optimiser la pression de fonctionnement du ou des régulateurs, assurant ainsi le réel débit d'extraction pour une consommation énergétique optimisée.

Selon une caractéristique de l'invention, la répartition d'air à l'étape E est proportionnelle aux besoins identifiés en étape D, ce qui permet une meilleure répartition de l'air dans les pièces. Préférentiellement, la répartition du débit d'air extrait est réalisée au prorata du besoin dans les pièces techniques, réduisant ainsi le risque de condensation dans les pièces techniques.

Selon une caractéristique de l'invention, les étapes A et B sont réalisées simultanément ou l'une après l'autre avec l'étape A avant l'étape B ou l'étape B avant l'étape A.

Selon une autre caractéristique de l'invention, la répartition de l'air est réalisée à partir d'un mode d'auto-apprentissage de l'unité de commande centrale.

Le mode d'auto-apprentissage des écoulements d'air permet d'obtenir une réactivité plus importante dans l'évacuation des polluants. De plus, les portes entre les pièces sont des obstacles à l'écoulement de l'air et lors de la construction, les portes sont détalonnées pour limiter cette résistance, par conséquent, comme on vient extraire l'air au plus près de la source, on s'affranchit de cet aléa de chantier. En outre, le mode d'auto-apprentissage permet d'obtenir une meilleure efficacité énergétique. En effet, grâce à ce mode, le débit est plus efficace donc il est possible d'extraire moins de débit du logement.

Avantageusement, l'unité de commande centrale est conçue pour mémoriser des chemins d'air. Ainsi, l'unité de commande centrale mémorise le cheminement le plus efficace des polluants d'une pièce principale vers une pièce technique et agit préférentiellement sur le régulateur de la pièce technique identifiée comme la plus proche.

Par exemple, dans le cas d'une chambre parentale avec une salle bain intégrée, lorsque le capteur de pollution détecte dans la pièce désignée comme principale, à savoir la chambre, des variations de pollutions plus importantes que celles prévues normalement pour une pièce principale, le capteur transmet l'information de variation à l'unité de commande centrale. L'unité de commande centrale enregistre rapidement les variations, et y associe un ordre de commande qui consiste à choisir systématiquement la salle de bain intégrée de la chambre parentale comme étant la pièce technique la plus proche de la pièce principale et à commander le régulateur de la bouche d'extraction de la salle de bain, lorsque le capteur de pollution capte de la pollution dans la chambre parentale.

Selon une caractéristique de l'invention, la répartition d'air à l'étape E est réalisée en fonction d'un mode prédéterminé de répartition d'air extrait. Avantageusement, le ou les modes prédéterminés peuvent être fonction de l'occupation, de la saison, des conditions météorologiques... etc.

Par exemple, le système de ventilation pourrait présenter plusieurs modes prédéterminés tels que :
- un mode dit « vacances » dans lequel le système de ventilation reste sur un débit minimum prédéfini,
- un mode dit « boost » dans lequel on opère une accélération des débits pendant un temps prédéfini,
- un mode dit « sur-ventilation nocturne » dans lequel on augmente les débits au maximum la nuit sans s'occuper des capteurs de pollution, ce mode étant préférentiellement opéré en été,
- un mode dit « autodiagnostic » dans lequel on opère une ouverture et une fermeture successive des régulateurs pour vérifier l'obtention des débits dans le système de ventilation.

Bien entendu, tous les modes détaillés ci-dessus sont des exemples et l'invention n'est pas limitée à ces exemples. En outre les modes prédéterminés présentés ci-dessus sont énumérés et un même système de_ventilation peut comprendre tous ces modes ou bien un seul ou bien une pluralité d'entre eux.

Grâce à l'invention, la qualité de l'air intérieur est améliorée tout en diminuant les consommations énergétiques liées au renouvellement de l'air.

La description décrit également un système de ventilation simple flux pour bâtiment d'habitation comportant au moins une pièce technique et une pièce principale, le système de ventilation comprenant au moins une branche d'extraction d'air destinée à desservir la pièce technique du bâtiment d'habitation, un capteur de pollution destiné à être positionné dans la pièce technique, ou dans un conduit desservant celle-ci, une unité de commande centrale conformée pour commander au moins un régulateur positionné dans de la branche d'extraction à partir des mesures effectuées par le capteur de pollution de pièce technique, caractérisé en ce que le système de ventilation comprend au moins un capteur de pollution destiné à être positionné dans une pièce principale du bâtiment, l'unité de commande centrale commandant le régulateur également à partir des mesures effectuées par le capteur de pollution de pièce principale.

Ainsi, le système de ventilation mesure les pollutions des pièces principales et des pièces techniques. Ces mesures sont transmises à une unité de commande commune gérant l'ensemble des régulateurs ce qui permet d'ajuster en fonction de la pollution d'une pièce le volume d'air requis dans cette pièce ainsi que dans les autres pièces. En outre, l'invention permet d'éviter l'ajout de bouches d'extraction d'air dans les pièces principales et de réduire significativement le coût de l'installation.

Le au moins un capteur de pollution de pièce technique et/ou le au moins un capteur de pollution de pièce principale est un capteur de dioxyde carbone ou un capteur de composé organique volatil ou un capteur d'hygrométrie ou un capteur de présence. Avantageusement, le capteur de pollution de pièce technique est différent du capteur de pollution de pièce principale de sorte que la mesure de données et la comparaison de ces données permettent une évaluation plus précise des besoins en ventilation. Par exemple, le capteur de pollution de pièce technique mesure le taux d'humidité et le capteur de pièce principale mesure le taux de dioxyde de carbone.

Le régulateur est intégré dans la branche d'extraction. De préférence, le régulateur est intégré au plus proche du ventilateur de la branche d'extraction.

La branche d'extraction débouche dans la pièce technique et se termine par une grille.

La ou les entrées d'air peuvent être du type auto-réglable, hygroréglable, ou pilotée par l'unité centrale.

Chaque régulateur comprend un volet destiné à régler l'ouverture et la modulation de débit d'au moins une branche d'extraction.

L'invention sera mieux comprise, grâce à la description ci-après, qui se rapporte à un mode de réalisation selon la présente invention, donné à titre d'exemple non limitatif et expliqué avec référence au dessin schématique annexé, dans lequel:

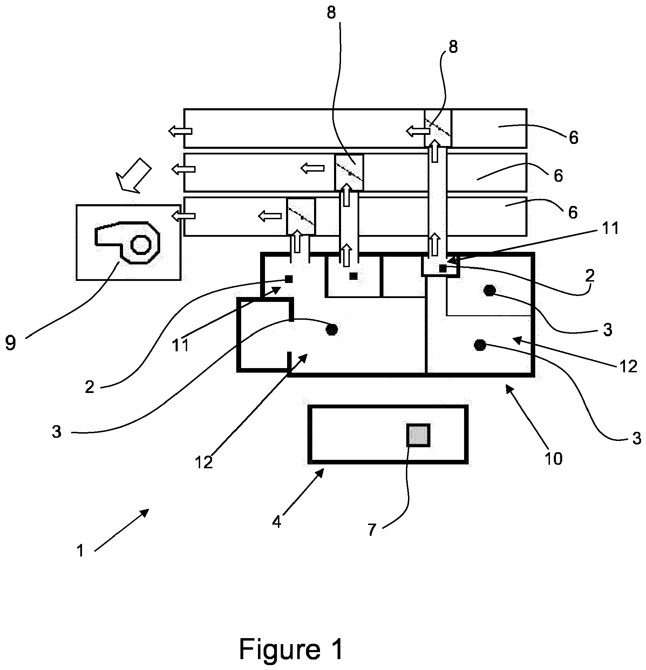

- la figure 1 représente une vue schématique du système de ventilation selon l'invention au sein d'un bâtiment de logements,

Le système de ventilation 1 selon l'invention est destiné à être installé dans des bâtiments de logements 10 comprenant au moins une pièce technique 11, correspondant à des pièces du type cuisine, toilettes ou salle de bain, et au moins une pièce principale 12, correspondant à des pièces du type salon ou chambre.

Dans l'exemple illustré en figure 1, le système de ventilation 1 comprend trois capteurs pollution de pièce technique 2 et trois capteurs de pollution de pièces principales 3. Dans cet exemple, les capteurs de pollution de pièce technique 2 et les capteurs de pièce principale 3 sont positionnés dans les pièces mais ils auraient très bien pu être disposés au moins en partie sur un régulateur 8 conformément à l'invention.

Selon l'invention et comme représenté en figure 1, on mesure la pollution dans les pièces techniques 11 au moyen des capteurs de pollution de pièce technique 2 et on mesure la pollution dans les pièces principales 12 au moyen des capteurs de pollution de pièce principale 3. Bien évidemment, chaque pièce peut comprendre une pluralité de capteurs de pollution et l'invention n'est pas limitée à l'exemple illustré.

Une fois les mesures effectuées, lesdites mesures sont transmises à une unité de commande centrale 4 qui compare à l'aide d'un contrôleur 7 les mesures relevées pour les pièces techniques 11 et les pièces principales 12.

A partir de cette comparaison, l'unité de commande centrale 4 peut identifier les besoins en extraction d'air pour chaque type de pièces ou pour chaque pièce technique 11 et/ou pièce principale 12.

Une fois les besoins identifiés, l'unité de commande centrale 4 envoie un signal de répartition d'air en fonction des besoins identifiés à un ou plusieurs régulateur 8 desservant la ou les pièces techniques 11. Si un besoin se fait sentir dans une pièce principale 12, il pourra alors être décidé d'actionner le régulateur 8 située dans la ou les pièce(s) technique(s) 11 la ou (les) plus proche(s).

Dans l'exemple représenté, les capteurs de pollution de pièce technique 2 sont des capteurs hygrométriques et les capteurs de pollution de pièce principale 3 sont des capteurs de dioxyde de carbone.

Bien entendu, l'invention n'est pas limitée au mode de réalisation décrit et représenté aux figures annexées ni à la variante de réalisation. Des modifications restent possibles, notamment du point de vue de la constitution des divers éléments ou par substitution d'équivalents techniques, sans sortir pour autant du domaine de protection de l'invention, qui est défini par les revendications 1 et 2.

## Revendications

1. Procédé de pilotage d'un système de ventilation (1) simple flux, **caractérisé en ce qu'**il comprend les étapes suivantes :
- Etape A : Mesure de pollution dans au moins une pièce principale (12) du bâtiment d'habitation (10) au moyen d'au moins un capteur de pollution de pièce principale (3),
- Etape B : Mesure de pollution dans au moins une pièce technique (11) du bâtiment d'habitation (10) au moyen d'au moins un capteur de pollution de pièce technique (2),
- Etape C : Comparaison des mesures effectuées en étape A et en étape B au moyen d'un calculateur (7) d'une unité de commande centrale (4),
- Etape D : Identification des besoins en extraction d'air pour chaque pièce technique (11) et/ou chaque pièce principale (12) au moyen du calculateur (7) de l'unité de commande centrale (4),
- Etape E : Commande de la répartition d'air en fonction des besoins identifiés en étape D de l'unité de commande centrale (4) vers au moins un régulateur (8), la répartition de l'air étant réalisée à partir d'un mode d'auto-apprentissage de l'unité de commande centrale (4).
- Etape F : Actionnement d'au moins un régulateur 8 associé à une branche d'extraction (6) en fonction de la commande de répartition de l'étape E,
- Etape G : Pilotage de la vitesse du moto-ventilateur (9).

2. Procédé de pilotage selon la revendication 1, dans lequel les étapes A et B sont réalisées simultanément ou l'une après l'autre avec l'étape A avant l'étape B ou l'étape B avant l'étape A.

## Patentansprüche

1. Steuerungsverfahren für ein Lüftungssystem (1) mit einfachem Luftfluss, **dadurch gekennzeichnet, dass** es die folgenden Schritte umfasst:
- Schritt A: Verunreinigungsmessung in mindestens einem Hauptraum (12) des Wohngebäudes (10) anhand mindestens eines Hauptraum-Verunreinigungssensors (3),
- Schritt B: Verunreinigungsmessung in mindestens einem Technikraum (11) des Wohngebäudes (10) anhand mindestens eines Technikraum-Verunreinigungssensors (2),
- Schritt C: Vergleichen der in Schritt A und in Schritt B durchgeführten Messungen anhand eines Rechners (7) einer zentralen Bedieneinheit (4),
- Schritt D: Identifizieren der Luftextraktionsbedürfnisse für jeden Technikraum (11) und/ oder jeden Hauptraum (12) anhand des Rechners (7) der zentralen Bedieneinheit (4),
- Schritt E: Bedienen der Luftverteilung in Abhängigkeit von den in Schritt D identifizierten Bedürfnissen, von der zentralen Bedieneinheit (4) zu mindestens einem Regler (8), wobei die Luftverteilung ausgehend von einem Selbstlernmodus der zentralen Bedieneinheit (4) realisiert wird,
- Schritt F: Betätigen mindestens eines einem Extraktionszweig (6) zugeordneten Reglers (8) in Abhängigkeit von der Verteilungsbedienung aus dem Schritt E,
- Schritt G: Steuern der Geschwindigkeit des Motorlüfters (9).

2. Steuerungsverfahren nach Anspruch 1, wobei die Schritte A und B gleichzeitig oder nacheinander, mit dem Schritt A vor dem Schritt B oder dem Schritt B vor dem Schritt A realisiert werden.

## Claims

1. A method for piloting a simple flow ventilation system (1), **characterized in that** it comprises the following steps:
- Step A: Measurement of pollution in at least one main room (12) of the residential building (10) by means of at least one main room pollution sensor (3),
- Step B: Measurement of pollution in at least one technical room (11) of the residential building (10) by means of at least one technical room pollution sensor (2),
- Step C: Comparison of the measurements performed at step A and at step B by means of a calculator (7) of a central control unit (4),
- Step D: Identification of the air extraction needs for each technical room (11) and/or each main room (12) by means of the calculator (7) of the central control unit (4),
- Step E: Control of the air distribution according to the needs identified at step D from the central control unit (4) towards at last one regulator (8), the air distribution being carried out from a self-learning mode of the central control unit (4),
- Step F: Actuation of at least one regulator 8 associated to an extraction branch (6) according to the distribution control of Step E,
- Step G: Piloting of the speed of the motor fan (9).

2. The piloting method according to claim 1, wherein steps A and B are carried simultaneously or one after the other with step A before step B or step B before step A.
